# FASCICULE DE BREVET EUROPEEN

(11) **EP 2 312 696 B1**
(45) Date de publication et mention de la délivrance du brevet: **12.09.2012**
(21) Numéro de dépôt: 10354050.6
(22) Date de dépôt: 17.09.2010
(51) Int. Cl.: H01R 9/26

(54) **Support de communication pour coffret ou armoire de distribution électrique**
Anzeigevorrichtung für Strom-Verteilerkasten
Communication support for electrical distribution cabinet

(30) Priorité: 19.10.2009 FR 0905002; 20.08.2010 FR 1003407
(43) Date de publication de la demande: 20.04.2011
(73) Titulaire: Schneider Electric Industries SAS, 92500 Rueil-Malmaison (FR)
(72) Inventeur: Linares, Louis, 38050 Grenoble Cedex 09 (FR); Waterlot, Frédéric, 38050 Grenoble Cedex 09 (FR); Contini, Erik, 38050 Grenoble Cedex 09 (FR); Glas, Carine, 38050 Grenoble Cedex 09 (FR); Debarnot, Miguel, 38050 Grenoble Cedex 09 (FR)
(74) Mandataire: Péru, Laurence

(56) Documents cités:
- EP-A1- 0 726 614
- WO-A1-2009/047329
- AU-A1- 2009 200 800
- DE-C1- 3 929 905
- DE-U- 7 025 172

## Description

### DOMAINE TECHNIQUE

L'invention concerne un dispositif permettant d'ajouter des éléments de communication dans un coffret ou une armoire de distribution comprenant des rails sur lesquels peuvent être montés divers appareils électriques comme des disjoncteurs. Notamment, le dispositif selon l'invention supporte des outils qui peuvent indiquer à l'usager la destination des appareils électriques montés dans l'armoire et/ou transmettre des données relatives aux appareils et/ou permettre un échange d'information entre les appareils.

### ETAT DE LA TECHNIQUE

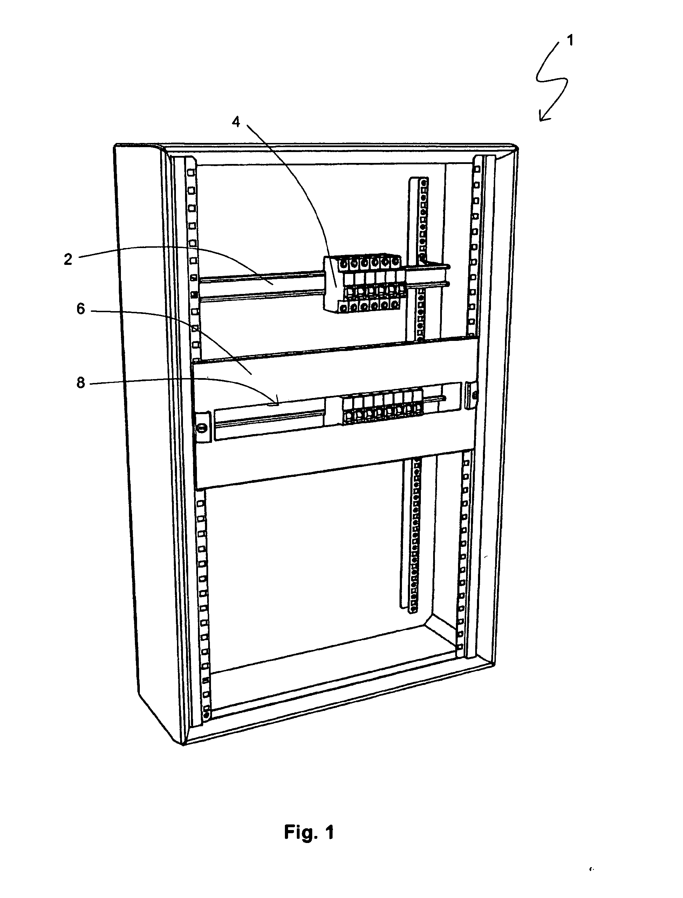

Une installation électrique comprend usuellement une ou plusieurs armoires rassemblant les appareils de protection et de commande électriques de l'installation. En particulier, tel que schématisé en figure 1, dans ce type d'armoire 1, des rails horizontaux 2, classiquement à profil DIN, supportent une juxtaposition d'appareils électriques modulaires 4, par exemple des disjoncteurs, relais, etc., raccordés en amont à l'alimentation et distribuant le courant en aval vers les charges. Suivant son environnement, sa configuration, voire pour des critères esthétiques, l'armoire 1 peut être dotée d'un ou plusieurs plastrons 6 protégeant la face avant des appareils 4 et recouvrant les systèmes de raccordement ; des évidements 8 donnent accès aux organes d'actionnement et manettes des appareils 4.

Pour repérer et identifier les appareils 4 montés dans les armoires 1, différents systèmes ont été proposés, par exemple dans DE 70 25 172 U. En particulier, il est possible d'inscrire directement sur le plastron 6 la destination des appareils 4 ; cependant, pour la maintenance ou toute modification de l'installation, le plastron 6 est retiré et l'étiquetage disparaît. Inversement, le document FR 2 844 138 propose un étui pour une étiquette fixé directement sur la rangée d'appareils 4 ; cependant, si un plastron 6 est mis en place, ce type d'identification devient ineffectif, et l'étui doit en outre être retiré pour le changement d'un des appareils 4 de la rangée. Le document EP 0 663 674 propose un système de repérage directement sur les appareils 4, ce qui cependant n'offre pas beaucoup de place pour les informations, en particulier s'il doit être adapté à la face visible de l'appareillage depuis l'évidement 8 d'un plastron 6 ; en particulier, cette solution n'est pas adaptée lorsque l'affectation du produit change en cours de vie et demanderait une réécriture malaisée sur les traces des informations effacées.

### EXPOSE DE L'INVENTION

Parmi autres avantages, l'invention vise à pallier des inconvénients des solutions existantes pour l'information relative aux appareils électriques dans un tableau ; en particulier, l'invention propose un dispositif qui peut être lisible en présence et en l'absence de plastron. L'invention vise également à permettre une adaptabilité du dispositif supportant les moyens d'information, par exemple en incluant dans le terme « information » la communication au sein de l'appareillage électrique ou en combinant différents affichages.

Sous un aspect, l'invention concerne un dispositif de support de communication adapté pour un montage dans toute enveloppe électrique, de type coffret, tableau ou armoire, dans laquelle les appareils de protection et/ou commande sont mis en place sur des rails. Le dispositif selon l'invention comprend deux modules de montage adaptés pour les rails, avantageusement identiques entre eux, de préférence sensiblement de même forme que les appareils montés sur le rail ; entre les deux modules de montage, le dispositif comprend une partie intermédiaire mobile en pivotement par rapport aux modules. La partie intermédiaire comprend un réceptacle pour des moyens de communication, de forme sensiblement rectangulaire, associé, sur ses petits côtés, à chaque extrémité, à des branches pivotant sur les modules de montage par des moyens de couplage complémentaires avec les branches qui définissent des directions sécantes à celle définie par les grands côtés du réceptacle ; le couplage peut être réalisé par vissage ou rivetage, mais, de préférence, les moyens de couplage sont formés intégralement sur les branches et modules en plastique moulé et le couplage se fait par emboîtement forcé.

Le réceptacle, et plus généralement la partie intermédiaire, peut pivoter entre une première position dans laquelle il est sensiblement parallèle à la paroi de support des rails de montage, et une deuxième position sensiblement orthogonale à la première position. Ainsi, il est possible de mettre en place un plastron dans l'enveloppe pour protéger l'appareillage associé au dispositif selon l'invention tout en gardant apparents le réceptacle et les moyens de communication qu'il contient, en insérant le plastron autour de la partie intermédiaire dans la deuxième position et en replaçant le dispositif dans la première position ; inversement, dans les phases de maintenance, il est possible de retirer le plastron tout en conservant les fonctions de communication du réceptacle. Avantageusement, les moyens de couplage comprennent des moyens de verrouillage positif dans ces deux positions, par exemple un système de butée contrant la gravité en deuxième position et un système à encliquetage dans la première position.

Le réceptacle peut être adapté à tout moyen de communication. En particulier, il peut être associé à de simples étiquettes de repérage, ou il peut comprendre des logements pour des indicateurs bistables ou des diodes électroluminescentes, ou il peut être doté d'un écran de visualisation, par exemple à cristaux liquides ou à affichage rémanent, auquel cas des moyens de stockage d'énergie et/ou d'échange d'information peuvent en outre être prévus. Le réceptacle peut également être adapté pour des moyens de communication directe avec les appareils électriques ou entre eux, par exemple en contenant une antenne de réception de signaux radiofréquence émis par les appareils, la communication pouvant être configurée en l'absence de plastron et étant conservée en présence de plastron. Si des câbles ou fils d'alimentation sont intégrés au réceptacle, par exemple dans des guides gravés, les branches et/ou les modules de montage peuvent également être munis de guides similaires pour rassembler les câbles ou fils vers une sortie identifiée ; par exemple, les câbles passent dans les moyens de couplage de type pivot pour sortir latéralement sur un seul des modules de montage et pouvoir être raccordés dans l'armoire.

La partie intermédiaire du dispositif selon l'invention peut être unitaire ou peut comprendre différents éléments. En particulier, selon un mode de réalisation, le réceptacle est solidarisé aux branches, par exemple par insertion d'une protubérance de guidage dans une rainure. Le réceptacle lui-même peut être composé de plusieurs parties permettant une adaptation de sa longueur entre les deux modules de montage, par exemple par un système télescopique. Dans un autre mode de réalisation, le réceptacle est mobile par rapport aux branches et une troisième position est prévue dans laquelle le réceptacle est sensiblement parallèle à la paroi de fond des modules de montage, tout comme pour la première position, et les branches ne sont pas dans la première position ; avantageusement, la deuxième position des branches est intermédiaire entre la première et la troisième position des branches. Les moyens de solidarisation entre branches et réceptacles comprennent notamment une liaison pivot.

Selon une option de l'invention, le dispositif de support de communication peut comprendre deux réceptacles, similaires ou non, de façon à utiliser la partie supérieure et inférieure des appareils montés sur le rail ; les grands côtés des deux réceptacles ont cependant la même longueur. Les modules de montage comprennent alors deux moyens de couplage pivotant.

Sous un autre aspect, l'invention est relative à un tableau de distribution ou de commande électrique comprenant un rail de montage au moins sur lequel est mis en place au moins un dispositif de support de communication précédent. L'exploitation et la maintenance des tableaux sont ainsi facilitées et sécurisées.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1, déjà décrite, illustre le montage d'appareillages électriques dans une enveloppe existante.
Les figures 2A et 2B montrent en position montée et en éclaté un mode de réalisation préféré d'un dispositif de support selon l'invention.
Les figures 3A, 3B et 3C, 3D représentent schématiquement des alternatives de dispositifs selon l'invention.
Les figures 4A à 4D montrent l'utilisation d'un dispositif selon un mode de réalisation de l'invention sur une rangée d'appareils dans un coffret.

### DESCRIPTION DETAILLEE D'UN MODE DE REALISATION PREFERE

Selon l'invention, le dispositif 10 de support de communication est adapté à être monté sur les rails classiques 2 de montage, notamment les rails DIN, par exemple dans une installation 1 existante de type armoire, tableau, coffret, ou autre enveloppe, telle que schématisée en figure 1. Par simplification de la description des modes de réalisation selon l'invention, le dispositif 10 sera décrit en relation avec cette position d'utilisation sur un rail 2 monté sur une paroi verticale ; il est cependant entendu que les termes de position tels que « horizontal », « supérieur », « avant » ne sont nullement restrictifs quant à l'objet de l'invention. Par ailleurs, les termes géométriques, tels que « orthogonal »,... doivent se comprendre dans leur acceptation mécanique, c'est-à-dire tolérant un écart par rapport à la définition mathématique stricte : par exemple, un « rectangle » peut, selon l'invention, être bombé et avoir des angles émoussés différant légèrement de 90°.

Selon l'invention, le dispositif 10 de support de communication est adapté à prendre une position dans laquelle il est plaqué sur les appareils 4, respectivement le plastron 6, sensiblement parallèlement à la paroi supportant le rail de montage 2, et une deuxième position dans laquelle il peut traverser les évidements 8 des plastrons 6, c'est-à-dire sensiblement orthogonalement au rail de montage 2.

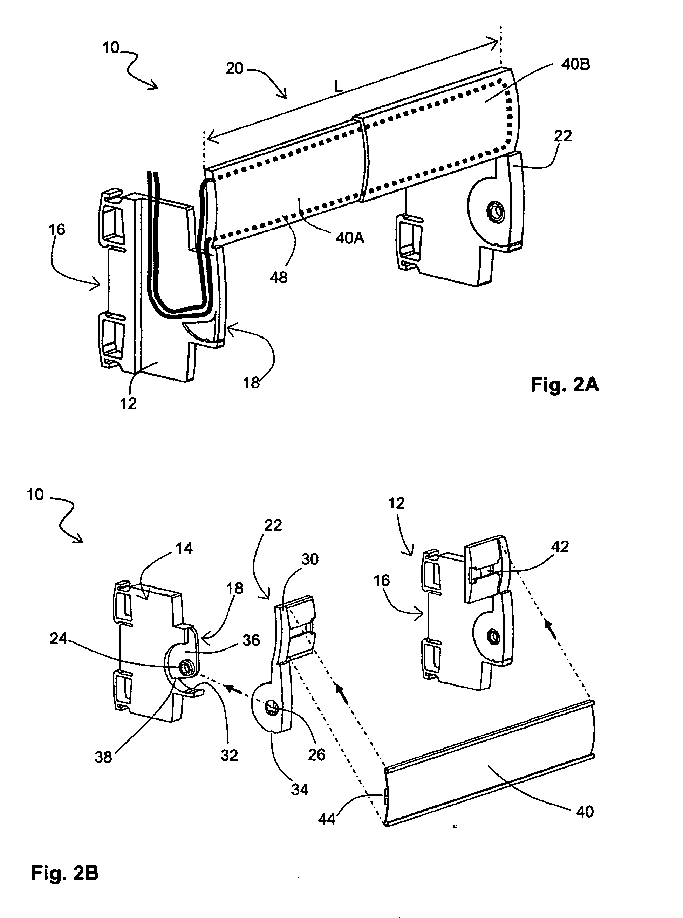

Tel qu'illustré en figures 2, le dispositif de support de communication 10 selon l'invention comprend aux extrémités deux modules 12 qui peuvent être montés de façon classique sur un rail 2 d'un tableau 1. En particulier, chaque module 12 comprend deux grandes faces opposées parallèles 14 destinées à être accolées aux appareils électriques 4, et une paroi de fond munie de moyens 16 permettant le montage sur le rail 2 ; les grandes faces 14 peuvent notamment être pleines et rapportées pour fermer un boîtier creux ou comprendre des aménagements apparents, le module de montage 12 étant monobloc en plastique moulé. De préférence, les modules 12 ont une forme sensiblement identique à celle des appareils de protection modulaires 4, plus ou moins normalisés, mis en place dans ce type de tableau 1, avec une face avant comprenant un nez 18 protubérant ; l'épaisseur entre les grandes faces 14 est avantageusement compatible avec le pas des appareils modulaires 4, la somme des épaisseurs des deux modules 12 étant par exemple égale à, ou multiple de, 9 mm. Les moyens de montage 16 sur le rail 2 peuvent prendre toutes les formes décrites en relation avec ce type d'appareils 4. Avantageusement, les deux modules 12 d'un dispositif 10 selon l'invention sont identiques afin de limiter le nombre de références industrielles et de simplifier l'assemblage ; il est possible par ailleurs de doter les modules 12 de diodes ou autres indicateurs.

Les deux modules de montage 12 sont placés de façon fixe sur le tableau 1 ; le dispositif de support 10 comprend par ailleurs une partie intermédiaire 20, reliant les deux modules 12, qui est mobile par rapport au rail 2 et destinée à supporter les moyens de communication en tant que tels. En particulier, la partie intermédiaire 20 comprend des branches 22 couplées de façon pivotante aux modules de montage 12 : à cette fin, chaque module 12 comprend des premiers moyens de couplage 24 complémentaires de deuxièmes moyens de couplage 26 solidaires d'une partie d'extrémité de chaque branche 22, de sorte qu'une extrémité de chaque branche 22 se déplace autour d'un cercle centré sur ses moyens de couplage 26 qui définissent un axe de rotation normal à la branche 22.

Les premiers et deuxièmes moyens de couplage 24, 26 peuvent être de tout type connu, et par exemple comprendre chacun un orifice dans lequel est inséré un axe au moment du couplage (non illustré) ; un couplage par rivets et/ou vis peut être choisi. Dans le mode de réalisation préféré illustré, les moyens de couplage 24, 26 sont formés intégralement avec les branches 22 et modules 12, et comprennent un plot 26, avantageusement sur le module 12, qui s'emboîte dans un évidement 24 d'une branche 22 : la mise en place de la partie intermédiaire 20 se fait par forçage et encliquetage.

Avantageusement, le débattement entre les modules fixes 12 et la partie mobile 20 est limité ; en particulier, il peut être avantageux que seule une rotation de 90° environ soit possible, et un système de butées est mis en place. Par ailleurs, il est avantageux de prévoir un verrouillage positif de la partie intermédiaire 20 par rapport aux modules de montage 12 dans la deuxième position, de préférence après une rotation à 90°, de façon à donner toute latitude dans la mise en place du plastron 6 en libérant les deux mains ; en complément, il peut également être avantageux de prévoir un verrouillage positif de la partie intermédiaire 20 par rapport aux modules de montage 12 dans la première position, de façon à stabiliser l'ensemble.

En particulier, et tel qu'illustré en figure 2B, si la première position est telle que la branche 22 est en équilibre instable vertical, avec l'extrémité 30 opposée aux moyens de couplage 26 au dessus desdits moyens 26, un des modules de montage 12 au moins et la branche 22 correspondante peuvent comprendre un système d'encliquetage 32, 34 qui peut être désactivé manuellement. En ce qui concerne le blocage dans une deuxième position horizontale, le module de montage 12 comprend des moyens de guidage 36 munis d'une butée 38 de fin de course coopérant avec un aménagement de la branche 22 quand la partie guidée a effectué 90° de sorte à contrer l'effet de la gravité. Toute autre alternative est possible.

La partie intermédiaire 20 peut être unitaire, avec un réceptacle 40 moulé intégralement entre les branches 22, excentré par rapport au pivot, notamment à une partie d'extrémité opposée 30, et les reliant. Selon un mode de réalisation, le réceptacle 40 entraîné directement par les branches 22 leur est solidarisé de façon fixe mais peut en être séparé. En particulier, les branches 22 comprennent, à leur partie d'extrémité 30 opposée aux moyens de couplage pivotant 26, des moyens de solidarisation du réceptacle 40, par exemple des rainures 42 avec possibilité d'encliquetage. Le réceptacle 40 quant à lui, de forme sensiblement rectangulaire dont le grand côté est destiné à être parallèle au rail 2 et aux appareils 4, comprend des moyens de solidarisation complémentaires à ses extrémités, notamment une protubérance 44 pouvant coulisser dans la rainure 42 ; les petits côtés du réceptacle 40 sont ainsi couplés le long des branches 22 de façon à former un U qui serait fermé par l'axe de rotation 26 de la partie intermédiaire 20.

Le grand côté du réceptacle 40 peut être de longueur L fixe prédéterminée, par exemple de la longueur d'un rail de montage 2 dans une armoire standard 1. Selon la configuration de l'installation, il peut être préférable de s'adapter à la distance réelle couverte par les appareils 4 montés sur le rail 2, par exemple pour limiter la taille de l'évidement 8 ; il est alors avantageux d'avoir un réceptacle 40 de longueur L adaptable, afin de retarder le choix de la longueur nécessaire. Dans une option, le réceptacle 40 peut être une lame de plastique pour des étiquettes sécable en longueur (figure 2B) ; dans une option préférée illustrée en figure 2A, le réceptacle 40 peut comprendre deux parties 40A, 40B télescopiques l'une par rapport à l'autre ce qui permet de s'adapter à une modification de l'installation.

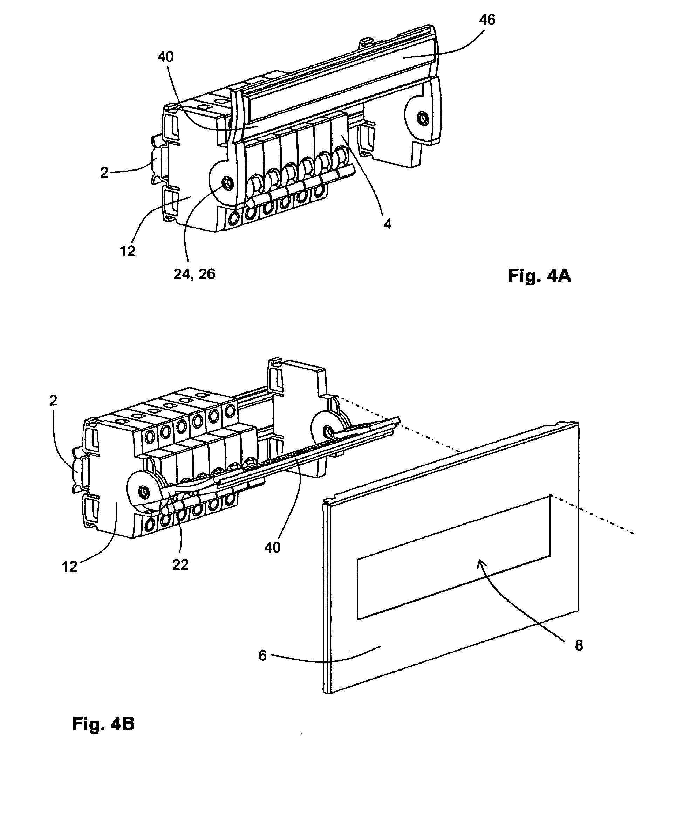

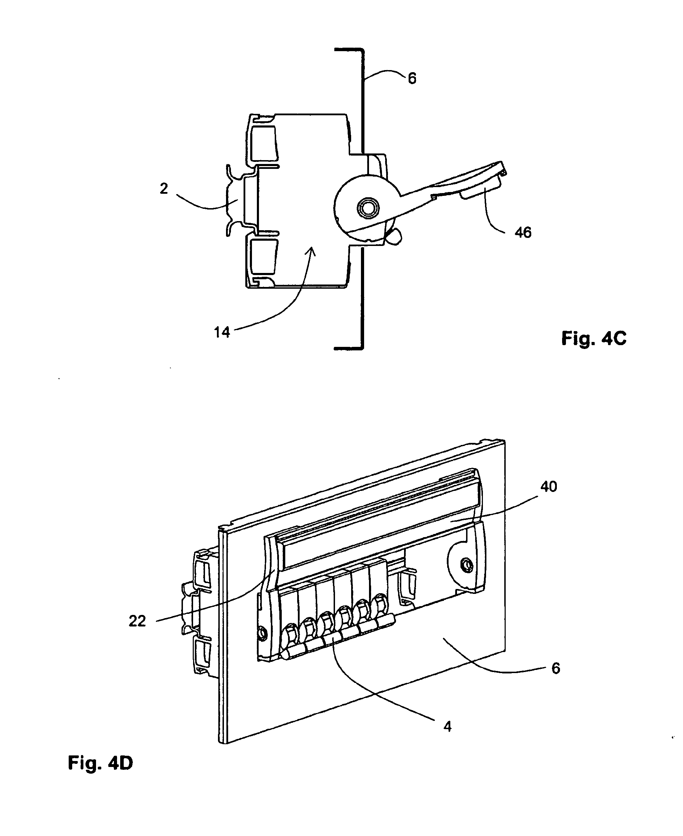

Le réceptacle 40 est de configuration adaptée au moyen de communication choisi. Dans le mode de réalisation illustré en figure 2B, le réceptacle comprend une simple réglette de plastique, dans ou sur laquelle peuvent être mises en place des étiquettes d'identification des appareils 4 adjacents. Le réceptacle 40 peut par ailleurs être doté de moyens lumineux, de type afficheurs bistables ou diodes électroluminescentes (LED), permettant de donner une information réactive ; selon le mode de réalisation illustré en figures 4, un écran 46 de type à cristaux liquides, ou à affichage rémanent, est associé au réceptacle 40 et permet de faire défiler et/ou de mettre à jour des informations. Tous les moyens optiques de visualisation nécessitant de l'énergie peuvent être alimentés par une batterie, le réceptacle 40 comprenant alors un logement adapté. Il est possible aussi que l'écran 46 ou les LED soient branchés directement au réseau, le réceptacle 40 comprenant alors des passages pour les fils d'alimentation. Dans cette option, il est avantageux que les branches 22 ainsi que les modules de montage 12 soient également dotés de ce type d'aménagement à l'intérieur de leur boîtier, ainsi que par exemple, au niveau des moyens de couplage pivotant 24, 26 pour diriger les fils vers l'intérieur de l'armoire 1. De cette façon, les fils d'alimentation restent invisibles et protégés, ainsi que parfaitement localisés, de sorte que l'encombrement interne à l'armoire 1 est limité et les risques d'endommagement diminués.

Dans un mode de réalisation avantageux schématisé en figure 2A, le réceptacle 40 peut être utilisé pour des moyens de communication avec ou entre les appareils électriques 4. En particulier, si les appareils 4 sont munis d'émetteurs/récepteurs de type radiofréquence, par exemple une étiquette de radio-identification RFID, le réceptacle 40 peut comprendre une ou plusieurs antennes 48 permettant une communication sans fil avec les appareils 4 qui le jouxteront. Ici encore, de préférence, les antennes 48 sont intégrées aux boîtiers des éléments de montage et de couplage 12, 22, 24, 26 pour des raisons fonctionnelles et esthétiques.

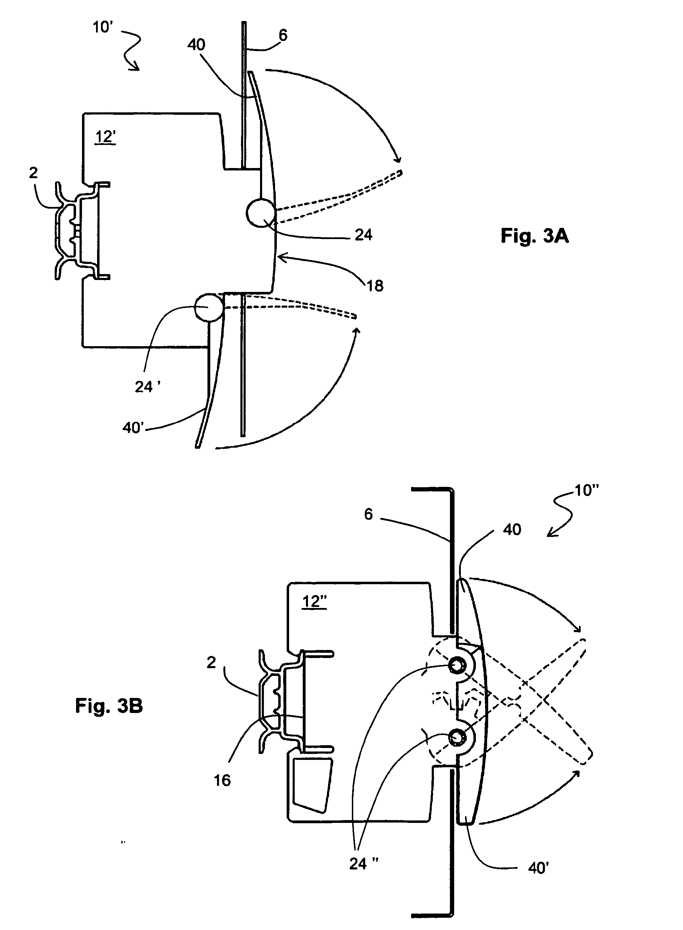

D'autres alternatives pour les moyens de communication sont envisageables. Par ailleurs, il est possible que le réceptacle 40 comprenne à la fois une antenne RFID 48 et un système d'identification directe pour l'usager. Si le nombre de fonctions à intégrer est important, il peut être intéressant que le dispositif 10', 10" selon l'invention comprenne deux réceptacles 40, 40', similaires ou différents mais dont la longueur des grands côtés est identique. En particulier, selon un mode de réalisation illustré en figure 3A, les modules d'extrémité 12' comprennent des moyens de solidarisation 24, 24' de chaque côté du nez 18, de façon à pouvoir coupler un réceptacle 40 vers le haut et un réceptacle 40' vers le bas, par exemple un écran LCD en haut et une antenne en bas, les deux réceptacles 40, 40' ayant alors des mouvements symétriques lors de leur passage d'une position à l'autre. Dans cette option, il peut être avantageux de prévoir des moyens de couplage 24, 24' tels que l'un des réceptacles 40', notamment lorsqu'il s'agit d'une antenne, reste toujours en arrière du plastron 6 dans la première position : ainsi, tel qu'illustré en figure 3A, les premiers moyens de solidarisation 24 sont localisés sur le nez 18 du module 12', les deuxièmes 24' étant en arrière.

Dans un mode de réalisation illustré en figure 3B, pour simplifier le passage de la première à la deuxième position, et inversement, de deux réceptacles 40, 40' mis en place sur les mêmes modules de montage 12", les moyens de couplage 24" peuvent comprendre un système de type ciseau, de sorte que les deux réceptacles 40, 40' sont actionnables simultanément.

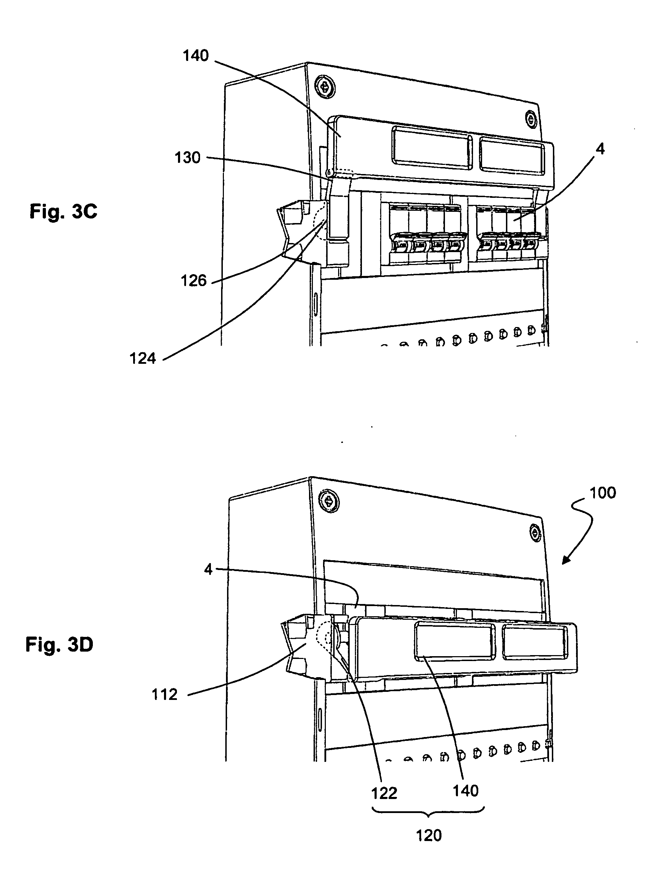

Selon l'invention et dans un mode de réalisation illustré en figures 3C et 3D, une articulation entre le réceptacle 140 et les branches 122 peut être prévue. En particulier, le réceptacle 140 est couplé de façon pivotante par rapport à une partie d'extrémité 130 des branches 122 opposée à l'extrémité des branches 122 comprenant les moyens de couplage 126 avec les moyens de couplage 124 des modules d'extrémité 112. Cette option permet une troisième position du réceptacle 140 (figure 3D) dans laquelle le réceptacle reste parallèle à la paroi de fond des modules 112 alors que les branches 122 ont pivoté hors de la première position ; il peut alors être avantageux que la troisième position corresponde à un pivotement des branches 122 supérieur à 90° par rapport à la première position (figure 3D), la deuxième position étant de fait intermédiaire entre la première et la troisième. Cette configuration est particulièrement adaptée à un afficheur rémanent et/ou à un dispositif de communication 100 susceptible d'échanger directement avec les appareils 4 qui seraient localisés entre les modules d'extrémité 112 et/ou à un tableau 1 dans lequel peu de place est *in fine* disponible au dessus ou en dessous des appareils 4 de sorte que l'affichage se fait devant lesdits appareils 4 ce qui permet de visualiser simultanément l'état et ou le marquage des disjoncteurs 4 et les informations affichées sur le dispositif 140 ; en outre, il est toujours possible d'enlever le plastron sans perdre l'étiquetage.

Le mode de réalisation illustré en figures 3C et 3D est particulièrement adapté pour un affichage rémanent pour lequel il n'est pas nécessaire de fournir une alimentation permanente au moyen de fil conducteurs devant être intégrés dans les pièces 112 , 122 et subir les déformations inhérentes au passage dans les articulations.

Plus généralement, lorsque le réceptacle 40, 140 comprend des moyens d'affichage rémanent, ceux-ci peuvent être prévus pour les différents modes d'utilisation et/ou de paramétrage prévus. Notamment, les moyens d'affichage peuvent être associés à un port USB, une configuration Bluetooth, ou tout autre moyens d'échange d'information pour permettre une communication configurée sur le support selon l'invention ; des moyens de stockage de données peuvent leur être associés, voire les remplacer. Il est possible de prévoir un câblage d'alimentation en énergie, ou des moyens de stockage ; dans un mode de réalisation avantageux, le réceptacle 140 comprend une capacité, par exemple de 1 Farad, qui peut être chargée lors de l'échange de données par l'intermédiaire du port consacré : l'énergie ainsi emmagasinée est suffisante pour l'échange du contenu de l'écran de visualisation. Les moyens d'affichage 140 peuvent en outre être associés à des moyens de sélection, par exemple des boutons poussoir ou des moyens tactiles, permettant à un utilisateur de sélectionner les données à afficher et/ou à transmettre au support de communication. Ces différentes options peuvent être utilisées avec d'autres moyens de communication, comme un écran à cristaux liquides.

Lors de la réalisation de l'installation électrique, un tableau 1 à rails 2 de type classique est utilisé, et la conception de l'installation et le montage des appareils 4 en tant que tels ne sont pas modifiés. Suivant le besoin, sur un rail 2, un dispositif 10 selon l'invention est intégré, avec les modules de montage 12 de part et d'autre d'une juxtaposition d'appareils électriques 4 : figure 4A. Il est possible d'assembler le dispositif 10 de support de communication préalablement à la mise en place sur le rail 2 (figure 2B), en particulier dans le cas où des liaisons filaires internes sont présentes ; pour un dispositif 10 plus simple, il est possible de mettre en place les modules de montage 12 au sein de la rangée et de ne finaliser le couplage de la partie intermédiaire 20 que plus tardivement. Quelle que soit l'option, le montage des modules 12 est direct, similaire à celui des appareils 4. Selon l'installation et les besoins en communication, il est possible de placer deux dispositifs 10 selon l'invention sur la même rangée, par exemple si des appareillages communicants sont localisés sur une première partie et si des appareillages pour lesquels un écran LCD est préféré sont sur une deuxième partie.

Une fois les câblages réalisés (avant mise en place des parties intermédiaires 20 et/ou dans la deuxième ou troisième position desdites parties 20, 120), les réceptacles 40 sont dans un premier temps placés dans leur première position de façon à pouvoir vérifier l'installation, éventuellement mettre en place les étiquettes correspondant aux appareils 4, tester les communications RFID, et/ou autres opérations classiques (figure 4A). Quand l'installation et la vérification du tableau 1 sont complétées, les réceptacles 40 et branches 22 sont déplacés vers leur deuxième position, sensiblement normale à la paroi de fond des modules de montage 12 (figure 4B) ; ce mouvement peut être réalisé par préhension directe sur un réceptacle 40, éventuellement muni d'une protubérance de saisie, ou toute autre alternative - dans le cas où une troisième position est possible, un verrouillage relatif peut être prévu entre le réceptacle 140 et les branches 122 pour maintenir la deuxième position dudit réceptacle 140. Dans cette deuxième position, un plastron 6 peut être mis en place sur les rangées d'appareils 4, en faisant passer le réceptacle 40 et les branches 22 dans l'évidement 8 ; de préférence, la longueur de l'évidement 8 du plastron 6 et la longueur L de la partie intermédiaire 20 sont adaptées pour que les branches 22 du dispositif jouxtent les bords de l'évidement 8 de sorte que les aspects esthétiques et de protection sont optimaux. Une fois le plastron 6 mis en place (figure 4C), la partie intermédiaire 20 est replacée dans la première position, de sorte que les informations sont visibles et que les manettes d'actionnement des appareils 4 sont accessibles (figure 4D) ; si aucun accès aux manettes n'est nécessaire et si cette option existe, la troisième position peut être choisie à ce stade. En cas de maintenance, pour retirer le plastron 6, la même manoeuvre est effectuée.

Ainsi, le dispositif 10 de support de communication selon l'invention permet un accès à l'information qu'il contient avec et sans plastron 6 ; il s'installe dans les tableaux universels 1 sur les mêmes rails 2, notamment DIN, de montage que les appareils électriques modulaires 4 ; le tableau 1 lui-même peut être prévu avec ou sans plastrons 6, le dispositif 10 selon l'invention permettant en outre de protéger les bornes de raccordement des appareils électriques 4 lorsque le(s) réceptacle(s) est(sont) dans la première position. Qui plus est, le dispositif 10 est indépendant du plastron 6 mais également de l'appareillage, ce qui permet une modification de chacun de ces éléments 4, 6 de façon aisée ; notamment, lorsque le dispositif 10 est dans sa première position parallèle à la paroi de montage, il est possible de retirer ou d'ajouter un appareil électrique 4 sur le rail 2. Par ailleurs, par l'intégration d'une antenne 48, le dispositif 10 permet de relayer des informations d'un système de communication de type RFID, qui peut être testé sans, et utilisé avec, plastron 6, sans perte d'information et de communication.

Bien que l'invention ait été décrite en référence à un dispositif destiné à porter des informations relatives à l'affectation d'un appareil de protection électrique dans une armoire, elle ne s'y limite pas : d'autres éléments peuvent être concernés par l'invention, comme en particulier les coffrets électriques ou les enveloppes contenant des appareillages électroniques de type par exemple répartiteurs téléphoniques. Par ailleurs, bien que décrits en combinaison, les différents éléments composant le mode de réalisation préféré selon l'invention peuvent être utilisés séparément ou avec des éléments alternatifs équivalents.

## Revendications

1. Dispositif (10) de support de communication destiné à être monté dans un tableau de distribution (1) qui comprend un rail (2) de montage d'appareils électriques (4), ledit dispositif (10) comprenant :
- deux modules (12,118) de montage comprenant chacun une paroi de fond munie de moyens de montage (16) adaptés au rail (2) du tableau (1) et des premiers moyens de couplage pivotant (24,124);
- une partie intermédiaire (20) comprenant un réceptacle (40,140) sensiblement rectangulaire pour des moyens de communication (46, 48) et
**caractérisé en ce que** la partie intermédiaire comprend deux branches (22,122) définissant une direction sécante à la direction définie par les grands côtés du réceptacle (40,140), une première partie d'extrémité (30,130) de chacune desdites branches (22,122) étant couplée aux petits côtés du réceptacle (40,140) et une deuxième partie d'extrémité de chacune desdites branches (22,122) comprenant des deuxièmes moyens (26,126) de couplage pivotant complémentaires des premiers moyens de couplage (24,124) ;
de sorte que la partie intermédiaire (20) peut être solidarisée aux modules de montage (12,112) par les premiers et deuxièmes moyens de couplage (24, 26,124,126) en pouvant pivoter entre une première position dans laquelle le réceptacle (40,140) et les branches (22,122) sont sensiblement parallèles à la paroi de fond des modules (12,112) de montage, et une deuxième position sensiblement orthogonale à la première position.

2. Dispositif de support selon la revendication 1 comprenant en outre des moyens de verrouillage positif (32, 34, 38) permettant de maintenir de façon stable la partie intermédiaire (20) dans la première et/ou la deuxième position.

3. Dispositif de support selon l'une des revendications 1 ou 2 dans lequel les deux modules de montage (12', 12") comprennent des troisièmes moyens de couplage pivotant (24').

4. Dispositif de support selon la revendication 3 comprenant en outre une deuxième partie intermédiaire comprenant un deuxième réceptacle (40') sensiblement rectangulaire pour des moyens de communication (46, 48), dont le grand côté a la même longueur (L) que le grand côté du réceptacle (40) associé aux deuxièmes moyens de couplage (26), et deux branches couplées aux petits côtés du deuxième réceptacle (40') comprenant chacune des quatrièmes moyens de couplage complémentaires des troisièmes moyens de couplage (24') pour pouvoir pivoter entre une première position dans laquelle le deuxième réceptacle (40') et ses branches sont sensiblement parallèles à la paroi de fond des modules (12', 12") de montage, et une deuxième position sensiblement orthogonale à la première position.

5. Dispositif de support selon l'une des revendications 1 à 4 dans lequel la partie intermédiaire (20) comprend un réceptacle (40) et des branches (22) distincts qui comprennent chacun des moyens de solidarisation complémentaires (42, 44).

6. Dispositif de support selon la revendication 5 dans lequel les moyens de solidarisation entre le réceptacle (140) et les branches (122) permettent un pivotement relatif de sorte que la partie intermédiaire (20) peut prendre une troisième position dans laquelle le réceptacle (140) est sensiblement parallèle à la paroi de fond des modules de montage (112) et les branches (122) ne sont pas dans la première position.

7. Dispositif de support selon la revendication 6 comprenant en outre des moyens de verrouillage positif permettant de maintenir le réceptacle (140) de façon stable par rapport aux branches (122) dans la première, deuxième et/ou troisième position.

8. Dispositif de support selon l'une des revendications 1 à 7 dans lequel le réceptacle (140) comprend des moyens d'affichage rémanent.

9. Dispositif de support selon la revendication 7 dans lequel les moyens d'affichage rémanent (140) comprennent des moyens permettant un échange d'information et/ou des moyens de stockage d'énergie.

10. Dispositif de support selon l'une des revendications 8 ou 9 dans lequel les moyens d'affichage rémanent (140) comprennent un câblage électrique pour lesdits moyens.

11. Dispositif de support selon l'une des revendications 1 à 7 dans lequel le réceptacle (40) comprend des moyens lumineux (46) et un câblage électrique pour lesdits moyens (46).

12. Dispositif de support selon l'une des revendications 1 à 11 dans lequel le réceptacle (40) comprend une antenne (48).

13. Dispositif de support selon l'une des revendications 10 à 12 dans lequel le câblage et/ou l'antenne (48) passent dans les modules de montage (12) via les moyens de couplage (24, 26).

14. Dispositif de support selon l'une des revendications 1 à 13 dans lequel les modules de montage (12) ont la forme de boîtiers d'appareils électriques modulaires (4).

15. Tableau d'installation électrique (1) comprenant au moins un rail de montage (2), une pluralité d'appareils électriques (4) juxtaposés sur le rail (2), et un dispositif (10) de support selon l'une des revendications 1 à 14 dans lequel les modules de montage (12,112) sont montés sur le rail (2) de part et d'autre de la juxtaposition d'appareils électriques (4) de sorte que le réceptacle (40,140) est parallèle à la juxtaposition.

## Claims

1. A communication support device (10) designed to be fitted in a distribution panel (1) that comprises a mounting rail (2) for electric equipment units (4), said device (10) comprising:
- two mounting modules (12, 112) each comprising a rear wall provided with mounting means (16) suitable for the rail (2) of the panel (1) and first swivelling coupling means (24, 124);
- an intermediate part (20) comprising a substantially rectangular receptacle (40, 140) for communication means (46, 48) and
- **characterized in that** the intermediate part comprises two branches (22, 122) defining a secant direction to the direction defined by the large sides of the receptacle (40, 140), a first end part (30, 130) of each of said branches (22, 122) being coupled to the small sides of the receptacle (40, 140), and a second end part of each of said branches (22, 122) comprising second swivelling coupling means (26, 126) complementary to the first coupling means (24, 124);
so that the intermediate part (20) can be securedly affixed to the mounting modules (12, 112) by the first and second coupling means (24, 26, 124, 126), being able to swivel between a first position in which the receptacle (40, 140) and branches (22, 122) are substantially parallel to the rear wall of the mounting modules (12, 112), and a second position substantially orthogonal to the first position.

2. The support device according to claim 1 further comprising positive locking means (32, 34, 38) enabling the intermediate part (20) to be secured in stable manner in the first and/or second position.

3. The support device according to one of claims 1 or 2 wherein the two mounting modules (12', 12") comprise third swivelling coupling means (24').

4. The support device according to claim 3 further comprising a second intermediate part comprising a second substantially rectangular receptacle (40') for communication means (46, 48), the large side of which has the same length (L) as the large side of the receptacle (40) associated with the second coupling means (26), and two branches coupled with the small sides of the second receptacle (40') each comprising fourth coupling means complementary to the third coupling means (24') to be able to swivel between a first position in which the second receptacle (40') is substantially parallel to the rear wall of the mounting modules (12', 12") and a second position substantially orthogonal to the first position.

5. The support device according to one of claims 1 to 4 wherein the intermediate part (20) comprises a receptacle (40) and distinct branches (22) which each comprise complementary securing means (42, 44).

6. The support device according to 5 wherein the securing means between the receptacle (140) and branches (122) enable relative swivelling so that the intermediate part (20) can take a third position in which the receptacle (140) is substantially parallel to the rear wall of the mounting modules (112) and the branches (122) are not in the first position.

7. The support device according to claim 6 further comprising positive locking means enabling the receptacle (140) to be secured in stable manner with respect to the branches (122) in the first, second and/or third position.

8. The support device according to one of claims 1 to 7 wherein the receptacle (140) comprises remanent display means.

9. The support device according to claim 7 wherein the remanent display means (140) comprise means enabling data exchange and/or energy storage means.

10. The support device according to one of claims 8 or 9 wherein the remanent display means (140) comprise electric wiring for said means.

11. The support device according to one of claims 1 to 7 wherein the receptacle (40) comprises luminous means (46) and electric wiring for said means (46).

12. The support device according to one of claims 1 to 11 wherein the receptacle (40) comprises an antenna (48).

13. The support device according to one of claims 10 to 12 wherein the wiring and/or the antenna (48) pass in the mounting modules (12) via the coupling means (24, 26).

14. The support device according to one of claims 1 to 13 wherein the mounting modules (12) are in the form of cases of modular electric equipment units (4).

15. An electric installation panel (1) comprising at least one mounting rail (2), a plurality of electric equipment units (4) juxtaposed on the rail (2), and a support device (10) according to one of claims 1 to 14 wherein the mounting modules (12, 112) are fitted on the rail (2) on each side of the juxtaposition of electric equipment units (4) so that the receptacle (40, 140) is parallel to the juxtaposition.

## Patentansprüche

1. Kommunikations-Trägersystem (10), das dazu dient, in einem Installationsverteiler (1) mit einer Tragschiene (2) für elektrische Schaltgeräte (4) montiert zu werden, welches System (10):
- zwei Befestigungsmodule (12, 112) mit jeweils einer Rückwand und darin ausgebildeten, an die Tragschienen (2) des Installationsverteilers (1) angepassten Befestigungsmitteln (16) sowie ersten schwenkbaren Verbindungsmitteln (24, 124) und
- ein Zwischenteil (20) mit einer annähernd rechteckigen Aufnahmevorrichtung (40, 140) zur Aufnahme von Kommunikationsmitteln (46, 48) umfasst,
**dadurch gekennzeichnet, dass** das Zwischenteil zwei Schenkel (22, 122) umfasst, die in einer Ebene ausgerichtet sind, welche die Ebene der langen Seiten der Aufnahmevorrichtung (40, 140) schneidet, wobei ein erster Endabschnitt (30, 130) jedes der genannten Schenkel (22, 122) mit den kurzen Seiten der Aufnahmevorrichtung (40, 140) verbunden ist und ein zweiter Endabschnitt jedes der genannten Schenkel (22, 122) zweite schwenkbare Verbindungsmittel (26, 126) umfasst, die an die ersten Verbindungsmittel (24, 124) angepasst sind,
derart, dass das Zwischenteil (20) über die ersten und zweiten Verbindungsmittel (24, 26, 124, 126) mit den Befestigungsmitteln (12, 112) verbunden und zwischen einer ersten Stellung, in der die Aufnahmevorrichtung (40, 140) und die Schenkel (22, 122) annähernd parallel zur Rückwand der Befestigungsmodule (12, 112) verlaufen, sowie einer, annähernd rechtwinklig zur ersten Stellung angeordneten zweiten Stellung verschwenkt werden kann.

2. Trägersystem nach Anspruch 1, das außerdem formschlüssige Verriegelungsmittel (32, 34, 38) umfasst, die es erlauben, das Zwischenteil (20) in der ersten und/oder zweiten Stellung in einer stabilen Lage zu halten.

3. Trägersystem nach einem der Ansprüche 1 oder 2, bei dem die beiden Befestigungsmodule (12', 12") dritte schwenkbare Verbindungsmittel (24') umfassen.

4. Trägersystem nach Anspruch 3, das außerdem ein zweites Zwischenteil mit einer annähernd rechteckigen zweiten Aufnahmevorrichtung (40') zur Aufnahme von Kommunikationsmitteln (46, 48) umfasst, deren lange Seite (L) die gleiche Länge aufweist wie die lange Seite der den zweiten Verbindungsmitteln (26) zugeordneten Aufnahmevorrichtung (40), wobei an zwei mit den kurzen Seiten der zweiten Aufnahmevorrichtung (40') verbundenen Schenkeln jeweils, an die dritten Verbindungsmittel (24') angepasste vierte Verbindungsmittel ausgebildet sind, um ein Verschwenken, zwischen einer ersten Stellung, in der die zweite Aufnahmevorrichtung (40') und die zugehörigen Schenkel annähernd parallel zur Rückwand der Befestigungsmodule (12', 12") verlaufen, und einer, annähernd rechtwinklig zur ersten Stellung angeordneten zweiten Stellung zu ermöglichen.

5. Trägersystem nach einem der Ansprüche 1 bis 4, bei dem das Zwischenteil (20) eine Aufnahmevorrichtung (40) und Schenkel (22) in anderer Ausführung aufweisen, an denen jeweils aneinander angepasste Verbindungsmittel (42, 44) ausgebildet sind.

6. Trägersystem nach Anspruch 5, bei dem die zwischen der Aufnahmevorrichtung (14) und den Schenkeln (122) angeordneten Verbindungsmittel eine relative Schwenkbewegung erlauben, derart dass das Zwischenteil (20) eine dritte Stellung einnehmen kann, in der die Aufnahmevorrichtung (140) annähernd parallel zur Rückwand der Befestigungsmodule (112) und die Schenkel (122) nicht in der ersten Stellung angeordnet sind.

7. Trägersystem nach Anspruch 6, das außerdem formschlüssige Verriegelungsmittel umfasst, die es erlauben, die Aufnahmevorrichtung (140) in der ersten, zweiten und/oder dritten Stellung in einer stabilen Lage in Bezug zu den Schenkeln (122) zu halten.

8. Trägersystem nach irgendeinem der Ansprüche 1 bis 7, bei dem die Aufnahmevorrichtung (140) Permanentanzeigemittel umfasst.

9. Trägersystem nach Anspruch 7, bei dem die Permanentanzeigemittel (140) Mittel zum Informationsaustausch und/oder zur Energiespeicherung umfassen.

10. Trägersystem nach einem der Ansprüche 8 oder 9, bei dem die Permanentanzeigemittel (140) eine für diese Anzeigemittel bestimmte elektrische Verdrahtung umfassen.

11. Trägersystem nach einem der Ansprüche 1 oder 7, bei dem die Aufnahmevorrichtung (40) Leuchtmittel (46) sowie eine für diese Leuchtmittel (46) bestimmte elektrische Verdrahtung umfassen.

12. Trägersystem nach irgendeinem der Ansprüche 1 bis 11, bei dem die Aufnahmevorrichtung (40) eine Antenne (48) umfasst.

13. Trägersystem nach einem der Ansprüche 10 bis 12, bei dem die Verdrahtung und/oder die Antenne (48) über die Verbindungsmittel (24, 26) in die Befestigungsmodule (12) geführt sind.

14. Trägersystem nach einem der Ansprüche 1 bis 13, bei dem die Befestigungsmodule (12) eine den Gehäusen von modularen elektrischen Schaltgeräten (4) entsprechende Form aufweisen.

15. Elektroinstallationsverteiler (1) mit mindestens einer Tragschiene (2), mehreren, auf der Tragschiene (2) aneinander gereihten elektrischen Schaltgeräten (4) und einem Trägersystem (10) nach einem der Ansprüche 1 bis 14, bei dem die Befestigungsmodule (12, 112) zu beiden Seiten der aneinander gereihten elektrischen Schaltgeräte (4) auf der Tragschiene (2) montiert sind, derart dass die Aufnahmevorrichtung (40, 140) parallel zur Schalterreihe angeordnet ist.
